# EUROPEAN PATENT SPECIFICATION

(11) **EP 2 272 322 B1**
(45) Date of publication and mention of the grant of the patent: **05.09.2012**
(21) Application number: 10006786.7
(22) Date of filing: 01.07.2010
(51) Int. Cl.: A01G 1/02, A01G 13/02

(54) **Agricultural sheet for mulching crops**
Landwirtschaftliche Folie zum Mulchen von Kulturen
Film agricole pour le paillage des cultures

(43) Date of publication of application: 12.01.2011
(73) Proprietor: Reyenvas, S.A., 41500 Alcalá de Guadaira Sevilla (ES)
(72) Inventor: Alvarez Ribalaygua, José Ramon, E-41500 Alcala de Guadaira (Sevilla) (ES)
(74) Representative: Canela Giménez, Teresa

(56) References cited:
- EP-A1- 1 101 400
- WO-A1-98/30082
- ES-U- 9 200 933

## Description

### FIELD OF THE INVENTION

The object of the present invention is a sheet for crops, especially of the type used in ridges, for example, for cultivating asparagus, that is provided with improved pockets fcr anchoring thereof to the ground.

### PRIOR ART

It is a standard practice in many farms to use plastic mulching for optimizing cultivation results. It is known that use of this type of mulching is highly beneficial to the development of crops (saving in herbicides, water, less maintenance of the soil structure, earliness, nascence and higher quality). Use of said plastic mulching involves burying both sides of the sheets, which prevents displacement thereof once mounted until completion of the cultivation.

Some crops, such as asparagus, fruit trees and others, require that the applied mulching be capable of being displaced during the development of the crop (fruit trees) or during harvesting (asparagus). To achieve that, the same applicant of the present invention developed in the oast a type of mulching comprising a hem and pockets that were fixed to the ground by filling said pockets with soil, this permitting both lifting of the mulching to access the soil or the crop and subsequent lowering of the plastic sheet back in place without damaging neither the plastic nor the plants underneath. Spanish utility model ES1020667U discloses a plastic film of the above-described type.

One of the drawbacks of this technique is that in terrains having some gradient or fields that are mechanically harvested, the scil lodged inside the pockets was free to move up and down the length of the pocket, it bunching up in certain areas and leaving some other large areas devoid of soil, this permitting the wind to eventually lift the mulching along those areas with the ensuing detriment to the crop, that is potentially very serious in the case of the asparagus.

Thereafter, a new welding (perpendicular to the main one) was designed, it having different designs and variants within the so-called Vertical Welding. That is the case of the Spanish patent ES2187225 (EP-A- 1101400).

The purpose of this vertical welding was compartmentalizing the pocket into smaller semi-isolated pockets. However, said designs failed to fully isolate the pockets since they left a gap between the end of said welding and the edge (fold) of the plastic sheet.

The reason why said welding did not reach the edge (thereby fully isolating the pockets) was in that case that the welding excessively weakened the side of the film, thereby facilitating the beginning and the spreading of rips that rendered the mulching useless. Therefore, in said developments a portion of the pocket did not become compartmentalized and from said portion, in certain conditions, soil was free to move from some pockets to others, especially in sandy soils, this reducing or neutralizing the advantage that was sought. Hence, one of the main purposes of the present invention is providing an agricultural sheet for mulching crops that improves the functionality of the pockets that anchor said sheet to the ground.

Another of the purposes of the invention is to provide an agricultural film having reinforced welds that preclude easy deterioration of said film after continuous use thereof in the maintenance tasks of the crops.

These and other advantages will become more apparent from throughout the description that follows.

### BRIEF DESCRIPTION OF THE INVENTION

The present invention refers to an agricultural sheet for mulching crops on which transverse welds are performed for compartmentalizing said lateral pockets from the very end of the folded edge forming said pockets, said sheet featuring at said end or edge an additional curved weld.

Besides the film of the present invention is provided with reinforcing welds that run transverse to the intermittent longitudinal welds forming the lateral pocket.

The so-formed and compartmentalized pockets with both the above-described transverse welds and the reinforcing welds are provided with drainage orifices that avoid accumulation of irrigation or rain water therein.

In this way each and every purpose of the invention is achieved, that is, obtaining a film for use in the mulching of crops whose pockets are fully compartmentalized without this meaning a decrease in the resistance thereof that may involve, due to the weakening of its structure, greater breakability of the film.

### BRIEF EXPLANATION OF THE DRAWINGS

For a better understanding of the invention, it is accompanied by two sheets containing merely illustrative and non-limiting drawings of the invention.

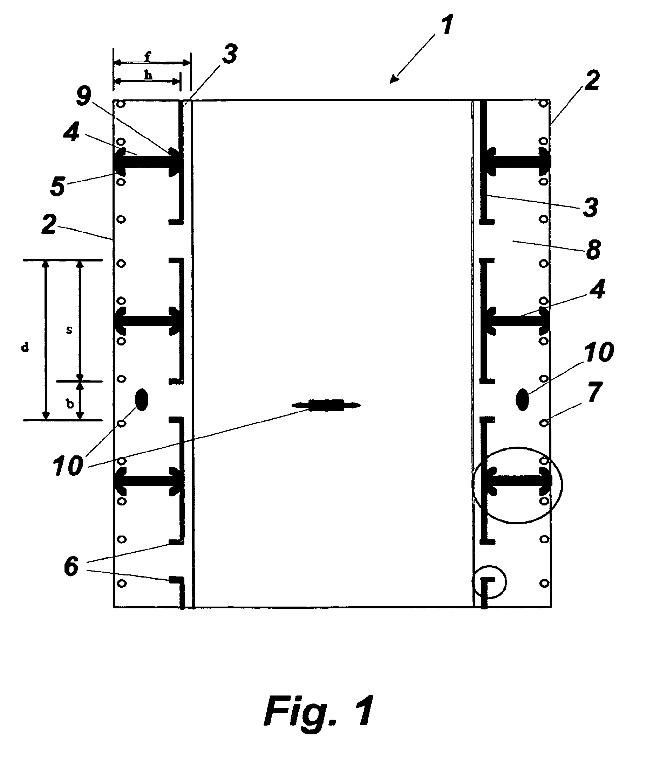

Figure 1 shows a top view of the film of the invention, wherein the essential elements used in the description of said film are shown in detail.

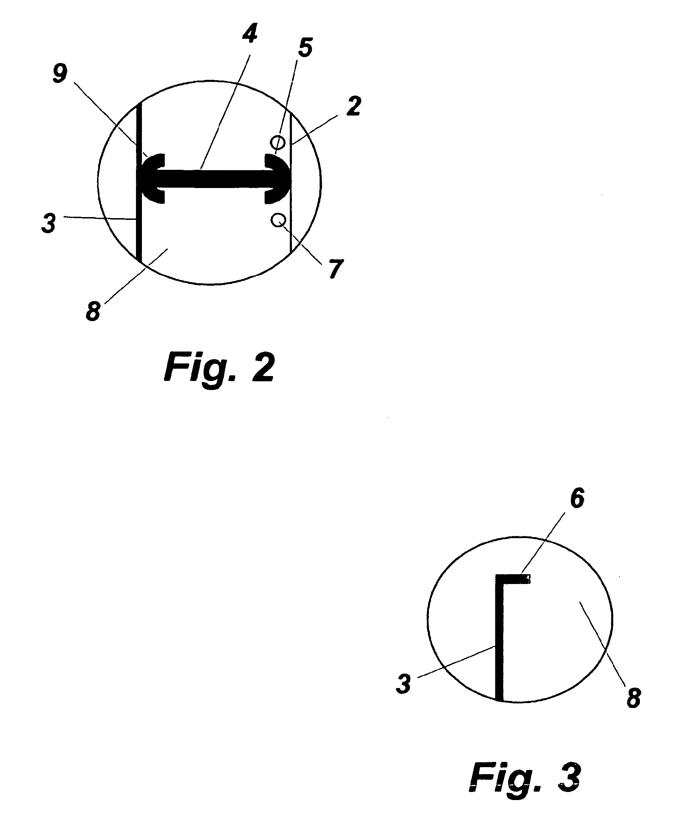

Figure 2 shows a detailed enlarged view both of the previous figure relating to the transverse welds intended to compartmentalize the lateral pocket and of its reinforcing curved welds.
Figure 3 shows another enlarged detail of figure 1, showing in this case the reinforcing welds of the intermittent longitudinal welds forming the lateral pocket.

### DETAILED EXPLANATION OF THE INVENTION

The invention consists of an agricultural sheet for mulching crops, according to claim 1, of the type provided, through folding (2) of its sides and intermittent longitudinal welding (3) in the longitudinal direction of the film (1), with a lateral area having pockets (8) configured to attain anchoring of the film to the ground through stuffing thereof. In said lateral area it is performed through transverse welding (4) a division of said pockets (8) into mutually watertight compartments, this being possible because said transverse welding (4) runs the full height of said lateral pocket area (8).

This new and improved compartmentalized sheet is especially designed for use as removable agricultural mulching in various types of crops such as the asparagus. This type of mulching features side folded borders (2), side folding, on which, upon performing intermittent longitudinal welding (3), lateral pockets (8) having an opening 'b' are made for inserting and storing soil or any other filling material in their interior, this permitting anchoring (by weight) of the film (1) to the ground without having to bury the plastic sides.

It follows from the above that the mulching can be lifted, removed and laid down back in place without damaging neither the plastic nor the crop. In crops lacking lateral pockets it is not possible to perform such operations, which are necessary for certain crops, such as in the cultivation of asparagus.

With respect to the figures, below are the meanings cf the letters appearing therein:
f: Width of the hem or fold.
h: Useful width of the pocket or compartment for storing the soil
b: Non-welded portions. Entrance to the pocket for filling thereof.
s: Length of the welded portion
d: Complete development of the pocket.

Distances 's' , 'b' and 'd' that define the intermittent welding may vary depending on the needs of each application. In any case, location of the pockets is indicated (10), marked or printed, on the film, whether in the center thereof, or on the pockets themselves, to help users find them.

This sheet made of plastic material can be White/Black, Black, White, Transparent, etc., as far as the color of the external faces thereof is concerned. The invention can also be applied to any type of film whose qualities in its central area differ from those of its sides.

The film (1) of the present invention incorporates intermittent longitudinal welding (3) featuring reinforcements. This reinforcing of the intermittent longitudinal welding (3) is obtained through a short-length transverse weld (6) performed at the beginning and at the end of each longitudinal weld (3), so that in his way it is managed to reinforce said weld, thereby avoiding that the longitudinal welding (3) of the hem begins to come off and/or tear apart. This guarantees, additionally, a greater uniformity in the 'h' width of the pocket (non-welded area). The length of such welding reinforcement may range between 5 and 60 mm depending on the particular needs.

Additionally, transverse welding (4) is performed to fully block movements of the soil or movements of other filling materials all along the length of the film pockets (8). Said transverse welding (4) spans the entire width of pocket 'h', so that it extends from the welded portion of the longitudinal welding (3) to the lateral edge (2) of the film. This way it is attained both a complete compartmentalization of the lateral pccket (8) into smaller pockets that are isolated from each other and fully watertight. The gap between the vertical welds or the development of each watertight closure (compartment) may range between 200 and 1500 mm depending on the particular needs of each application.

The advantage incorporated by this new design of transverse welding is that, since it is complete and fully isolates the pockets (8) from each other, it avoids at all times passage between pockets of soil or any other filling elements, this keeping soil, or any other elements used for filling the pockets, from becoming distributed unevenly and, hence, damaging perfect anchoring of the mulching to the ground.

With the known technique that was not possible because transverse welding upon reaching the end (2) of the film weakened the folds ot said welding, this causing the weakened areas to tear during use of the film (1), which implied a reduction in the useful life of the mulching.

To achieve the above it is necessary for the design of the welding to have a suitable shape and curvature so as both to keep the film (1) from weakening and to keep any possible incipient tear from spreading along it. Prior designs of vertical welds failed to stave off such spread, since they were shaped by straight lines that significantly facilitate tear spreading and weaken to a greater extent the mechanical properties of the product in said areas.

With this purpose, at the end areas of said transverse welding (4), respective curved welds (5 and 9) are arranged centered at the respective intersections of said transverse welding (4) and the end (2) of the hem or said longitudinal welding (3). It must stressed the fact that, additionally, these curved welds (5 and 9) create a reinforced area for manipulating the film (1) during use thereof.

As is known, tearing has a tendency to spread in straight lines, this being particularly so in case of areas that have previously been weakened (welds), and for this reason providing a curved shape (5 and 9) to the beginning and the end of the weld and generating brusque changes of direction in the profile of the weld avoid spreading of the tearing following the line cf the welding.

Additionally, the film of the present invention permits through the perforations (7) made in the pockets (8), the elimination of leftover rainwater or irrigation water that might have entered the pocket.

It is understood that in the present case any construction, finish of form details that do not alter or modify the essence of the invention can be varied.

## Claims

1. AGRICULTURAL SHEET FOR MULCHING CROPS, of the type used particularly in ridges, for instance for the cultivation of asparagus or fruit trees, of the type provided, through folding (2) of the sides thereof and intermittent longitudinal welding (3) in the longitudinal direction of the film (1), with a lateral area with pockets (8) shaped to attain anchoring of the film (1) to the ground through filling thereof, there being performed through transverse welding (4) in said lateral area the compartmentalizing of said pockets (8), **CHARACTERIZED in that** transverse welding (4) reaches the full height of said lateral pocket (8) area and develops compartments that are watertight to each another, there being provided reinforcing curved welding (5) around the intersection point of said transverse welding (4) and the edge of said fold (2) of said film (1).

2. AGRICULTURAL SHEET FOR MULCHING CROPS, according to claim 1, **CHARACTERIZED in that** it features reinforcing curved welding (9) around the intersection between said vertical welds (4) and said longitudinal welds (3).

3. AGRICULTURAL SHEET FOR MULCHING CROPS, according to the previous claims, **CHARACTERIZED in that** it has reinforcing welds (6) that are transverse relative to said longitudinal welds (3) at the end areas thereof for arranging entries to said pockets (8).

4. AGRICULTURAL SHEET FOR MULCIIING CROPS, according to the previous claims, **CHARACTERIZED in that** said pockets (8) are provided with orifices (7).

5. AGRICULTURAL SHEET FOR MULCHING CROPS, according to the previous claims, **CHARACTERIZED in that** it has marks (10) both on the central area of the film (1) and on the sides thereof for indicating the position of the 'B' entry area to said pockets (8).

6. AGRICULTURAL SHEET FOR MULCHING CROPS, according to claims 3 to 5 **CHARACTERIZED in that** the length of said welding reinforcements (6) ranges approximately between 5mm and 60 mm.

7. AGRICULTURAL SHEET FOR MULCHING CROPS, according to the previous claims, **CHARACTERIZED in that** the distance between said vertical welds (4) may range between approximately 200 mm and 1500 mm.

## Patentansprüche

1. Landwirtschaftliche Lage zum Mulchen von Bodenbewuchs, die der Art ist, die insbesondere an Hängen verwendet wird, beispielsweise zum Anbau von Spargel oder Obstbäumen, die durch Falten (2) ihrer Seiten und intermittierendes Längsschweißen (3) in Längsrichtung der Folie (1) bereitgestellt ist, wobei ein seitlicher Bereich mit Taschen (8) gebildet ist, die geformt sind, eine Verankerung der Folie (1) mit dem Boden durch deren Befüllung zu erreichen, wobei die Aufteilung der Taschen (8) durch Querschweißen (4) in dem seitlichen Bereich erzeugt wird, **dadurch gekennzeichnet, dass** das Querschweißen (4) die volle Höhe des seitlichen Taschenbereichs (8) erreicht und zueinander wasserdichte Fächer erzeugt, wobei eine verstärkende gekrümmte Schweißung (5) um den Schnittpunkt des Querschweißens (4) und der Kante der Falte (2) der Folie (1) vorgesehen ist.

2. Landwirtschaftliche Lage zum Mulchen von Bodenbewuchs nach Anspruch 1, **dadurch gekennzeichnet, dass** einen verstärkende gekrümmte Schweißung (9) um den Schnittpunkt zwischen den vertikalen Schweißungen (4) und den Längsschweißungen (3) vorgesehen ist.

3. Landwirtschaftliche Lage zum Mulchen von Bodenbewuchs nach den vorigen Ansprüchen, **dadurch gekennzeichnet, dass** Verstärkungsschweißungen (6) vorgesehen sind, die an ihren Endbereichen quer zu den longitudinalen Schweißungen (3) verlaufen, um Eingänge zu den Taschen (8) bereitzustellen.

4. Landwirtschaftliche Lage zum Mulchen von Bodenbewuchs nach den vorigen Ansprüchen, **dadurch gekennzeichnet, dass** die Taschen (8) mit Öffnungen (7) versehen sind.

5. Landwirtschaftliche Lage zum Mulchen von Bodenbewuchs nach den vorigen Ansprüchen, **dadurch gekennzeichnet, dass** sie sowohl auf dem Zentralbereich der Folie (1) als auch ihren Seiten Markierungen (10) aufweist, um die Position des 'B' Eingangsbereichs der Taschen (8) anzuzeigen.

6. Landwirtschaftliche Lage zum Mulchen von Bodenbewuchs nach Ansprüchen 3 bis 5, **dadurch gekennzeichnet, dass** die Länge der Verstärkungsschweißungen (6) ungefähr in einem Bereich von 5mm bis 60mm beträgt.

7. Landwirtschaftliche Lage zum Mulchen von Bodenbewuchs nach den vorigen Ansprüchen, **dadurch gekennzeichnet, dass** der Abstand zwischen den vertikalen Schweißungen (4) ungefähr in einem Bereich zwischen 200mm und 1500mm betragen kann.

## Revendications

1. FILM A USAGE AGRICOLE POUR LE PAILLAGE DES CULTURES, du type utilisé surtout sur des pentes, par exemple pour la culture des asperges ou des arbres fruitiers, du type de films comprenant, par pliage (2) de ses côtés et soudures longitudinales intermittentes (3), dans la direction longitudinale du film (1), des poches (8) en une zone latérale conformées pour obtenir l'ancrage du film (1) au sol par leur remplissage, un cloisonnement de ces poches (8) étant réalisé dans ladite zone latérale par des soudures transversales (4), **CARACTERISE en ce que** lesdites soudures transversales (4) s'étendent sur toute la hauteur de ladite zone à poches (8) latérales, et forment des compartiments qui sont étanches les uns par rapport aux autres, une soudure courbe (5) de renforcement étant aménagée autour du point d'intersection de ladite soudure transversale (4) et du bord dudit pli (2) dudit film (1).

2. FILM A USAGE AGRICOLE POUR LE PAILLAGE DES CULTURES selon la revendication 1, **CARACTERISE en ce qu'**il présente des soudures courbes (9) de renforcement autour de l'intersection desdites soudures verticales (4) et desdites soudures longitudinales (3).

3. FILM A USAGE AGRICOLE POUR LE PAILLAGE DES CULTURES selon les revendications précédentes, **CARACTERISE en ce qu'**il comprend des soudures de renforcement (6), transversales par rapport auxdites soudures longitudinales (3) dans leurs zones d'extrémité pour aménager des entrées auxdites poches (8).

4. FILM A USAGE AGRICOLE POUR LE PAILLAGE DES CULTURES selon les revendications précédentes, **CARACTERISE en ce que** lesdites poches (8) ont des trous (7).

5. FILM A USAGE AGRICOLE POUR LE PAILLAGE DES CULTURES selon les revendications précédentes, **CARACTERISE en ce qu'**il comprend des marques (10) à la fois dans la zone centrale du film (1) et sur ses côtés, indiquant l'emplacement de la zone "B" d'entrée desdites poches (8).

6. FILM A USAGE AGRICOLE POUR LE PAILLAGE DES CULTURES selon les revendications 3 à 5, **CARACTERISE en ce que** lesdits renforcements par soudage (6) ont une longueur approximative comprise entre 5 mm et 60 mm.

7. FILM A USAGE AGRICOLE POUR LE PAILLAGE DES CULTURES selon les revendications précédentes, **CARACTERISE en ce que** la distance entre lesdites soudures verticales (4) peut varier entre environ 200 mm et 1500 mm.
